# EUROPEAN PATENT APPLICATION

(11) **EP 2 081 110 A1**
(43) Date of publication of application: **22.07.2009**
(21) Application number: 08150381.5
(22) Date of filing: 17.01.2008
(51) Int. Cl.: G06F 3/048

(54) **Side-bar menu and menu on a display screen of a handheld electronic device**

(71) Applicant: Research In Motion Limited, Waterloo, Ontario N2L 3W8 (CA)
(72) Inventor: Moosavi, Vahid, Kitchener, Ontario N2R 1K6 (CA)
(74) Representative: Fennell, Gareth Charles

(57) **Abstract**

A handheld electronic device (300) includes a display screen (322) located on the device. The handheld electronic device features a body (371) housing a microprocessor-run software application program that displays a menu (104) including available user actions on a display screen of the handheld electronic device. The microprocessor-run software application displays a plurality of legends (110,120) at a lateral side of the displayed menu based on receipt of a cursor position data indicating that the cursor on the display screen is in a proximate area of the display screen on which the plurality of legends are displayed.

## Description

### FIELD

This disclosure, in a broad sense, is directed toward a handheld electronic device that has wireless communication capabilities and the networks within which the wireless communication device operates. The present disclosure further relates to providing a side-bar of legends to a displayed menu on a display screen of a handheld electronic device.

### BACKGROUND

With the proliferation of wireless communication systems, compatible handheld communication devices are becoming more prevalent, as well as advanced. Whereas in the past such handheld communication devices were typically limited to either voice transmission (cell phones) or text transmission (pagers and PDAs), today's consumer often demands a multifunctional device capable of performing both types of transmissions, including even sending and receiving e-mail. Furthermore, these higher-performance devices can also be capable of sending and receiving other types of data including that which allows the viewing and use of Internet websites. These higher level functionalities demand greater user interaction with the devices through included user interfaces (UIs) which may have originally been designed to accommodate making and receiving telephone calls and sending messages over a related Short Messaging Service (SMS). As might be expected, suppliers of such mobile communication devices and the related service providers are anxious to meet these customer requirements, but the demands of these more advanced functionalities have in many circumstances rendered the traditional user interfaces unsatisfactory, a situation that has caused designers to have to improve the UIs through which users input information and control these sophisticated operations. It is desirable to improve the UI associated with the handheld communication devices.

### BRIEF DESCRIPTION OF THE DRAWINGS

Exemplary methods and arrangements conducted and configured according to the advantageous solutions presented herein are depicted in the accompanying drawings wherein:

FIG. 1 illustrates a handheld wireless communication device configured according to the present teachings cradled in the palm of a user's hand;

FIG. 2 is a block diagram representing a wireless handheld communication device interacting in a communication network;

FIG. 3 illustrates a full keyboard handheld electronic device according to the present disclosure;

FIG. 4 illustrates a menu and two side-bars of legends on a display screen of a handheld electronic device;

FIG. 5 illustrates a shrunken menu and two side-bars of legends on the display screen of the handheld device;

FIG. 6 illustrates an enlarged right side side-bar of legends and a shrunken menu on the display screen of the handheld electronic device;

FIG. 7 illustrates an enlarged left side side-bar of legends on the display screen of the handheld electronic device; and

FIG. 8 illustrates an exemplary flow chart of a method according to the present disclosure.

### DETAILED DESCRIPTION

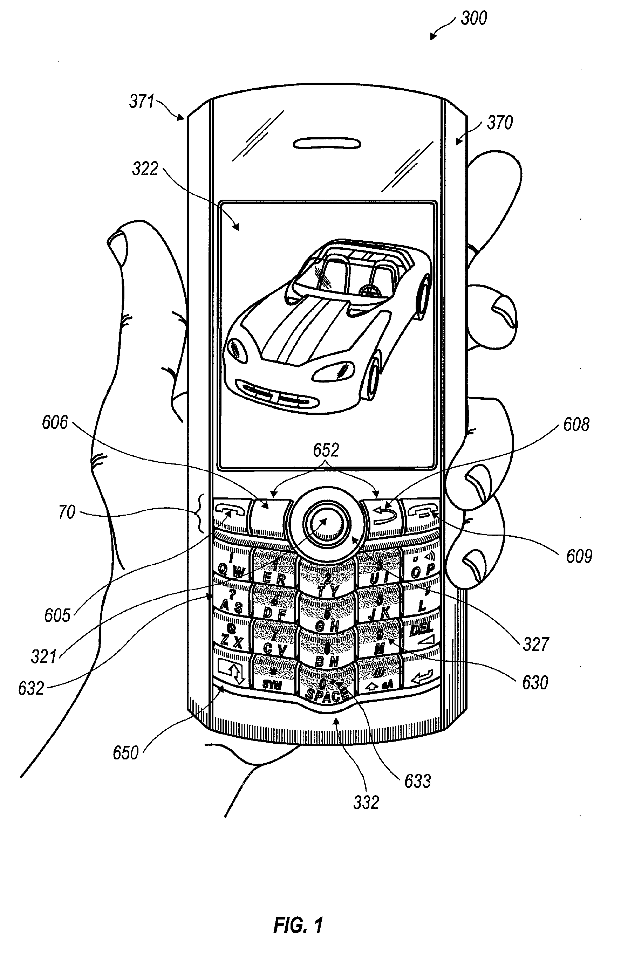

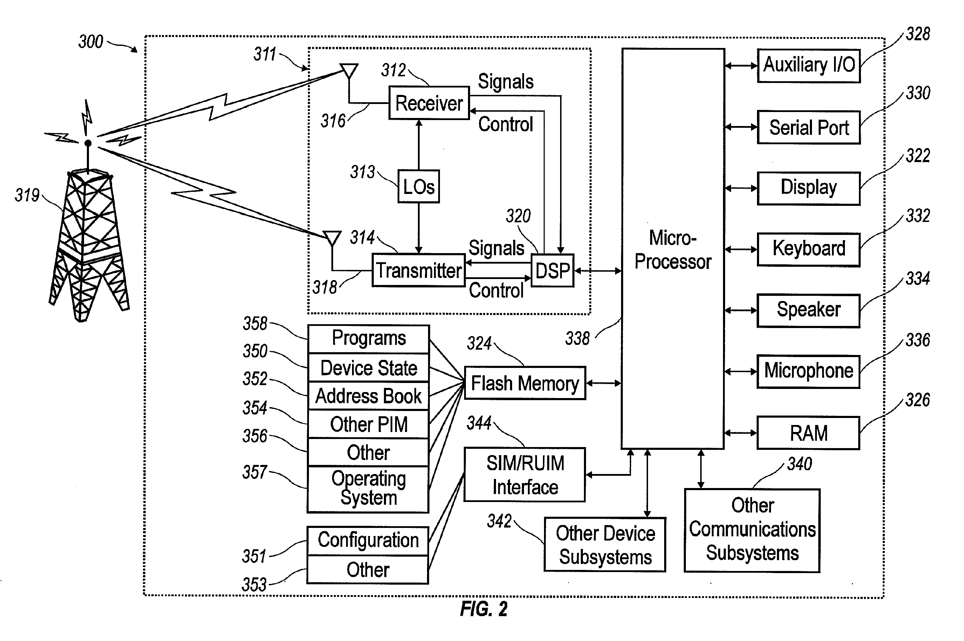

An exemplary handheld wireless communication device 300 is shown in FIG. 1, and the device's cooperation in a wireless network 319 is exemplified in the block diagram of FIG. 2. These figures are exemplary only, and those persons skilled in the art will appreciate the additional elements and modifications necessary to make the device 300 work in particular network environments.

As shown in the block diagram of FIG. 2, the handheld device 300 includes a microprocessor 338 that controls the operation of the device. A communication subsystem 311 performs all communication transmission and reception with the wireless network 319. The microprocessor 338 further connects with an auxiliary input/output (I/O) subsystem 328, a serial port (for example, a Universal Serial Bus port) 330, a display 322, a keyboard 332, a speaker 334, a microphone 336, random access memory (RAM) 326, and flash memory 324. Other communication subsystems 340 and other device subsystems 342 are generally indicated as being functionally connected with the microprocessor 338 as well. An example of a communication subsystem 340 is that of a short range communication system such as BLUETOOTH® communication module or a WI-FI® communication module (a communication module in compliance with IEEE 802.11b) and associated circuits and components. Additionally, the microprocessor 338 is able to perform operating system functions and enables execution of software applications on the handheld wireless communication device 300.

The auxiliary I/O subsystem 328 can take the form of a variety of different navigation tools (multi-directional or single-directional) such as a trackball navigation tool 321 as illustrated in the exemplary embodiment shown in FIG. 1, or a thumbwheel, a navigation pad, a joystick, or the like. These navigation tools may be located on the front surface of the handheld device 300 or may be located on any exterior surface of the handheld device 300. Other auxiliary I/O subsystems can include external display devices and externally connected keyboards (not shown). While the above examples have been provided in relation to the auxiliary I/O subsystem 328, other subsystems capable of providing input or receiving output from the handheld device 300 are considered within the scope of this disclosure. Additionally, other keys may be placed along the side of the handheld device 300 to function as escape keys, volume control keys, scrolling keys, power switches, or user programmable keys, and may likewise be programmed accordingly.

As may be appreciated from FIG. 1, the handheld wireless communication device 300 comprises a lighted display 322 located above a keyboard 332 constituting a user input and suitable for accommodating textual input to the handheld wireless communication device 300. The front face 370 of the device has a navigation row 70 and a key field 650 that includes alphanumeric keys 630, alphabetic keys 632, numeric keys 633, and other function keys as shown in FIG. 1. As shown, the handheld device 300 is of unibody construction, also known as a "candy-bar" design.

Keys, typically of a push-button or push-pad nature, perform well as data entry devices but present problems to the user when they must also be used to effect navigational control over a screen-cursor. In order to solve this problem the present handheld wireless communication device 300 may include an auxiliary input that acts as a cursor navigation tool 327 and which is also exteriorly located upon the front face 370 of the device 300. Its front face location allows the tool to be easily thumb-actuable like the keys of the keyboard. An embodiment provides the navigation tool 327 in the form of a trackball 321 which can be utilized to instruct two-dimensional screen cursor movement in substantially any direction, as well as act as an actuator when the trackball 321 is depressed like a button. The placement of the navigation tool 327 may be above the keyboard 332 and below the display screen 322; here, it can avoid interference during keyboarding and does not block the user's view of the display screen 322 during use. (See FIG. 1).

As illustrated in FIG. 1, the handheld wireless communication device 300 may be configured to send and receive text messages. The handheld device 300 includes a body 371 configured to be held in one hand by an operator of the device during text entry. A display 322 is included which is located on a front face 370 of the body 371 and upon which information is displayed to the operator during text entry. A key field 650 is also located on the front face 370 of the body 371 and comprises a plurality of keys including a plurality of alphanumeric keys 630, symbol keys, and function keys. A navigation row 70 including menu keys 652 and a navigation tool 327 is also located on the front face 370 of the body 371. The alphanumeric input keys 630 comprise a plurality of alphabetic keys 632 and numeric keys 633 having letters and numbers associated therewith. The order of the letters of the alphabetic keys 632 on the presently disclosed handheld device 300 can be described as being of a traditional, but non-ITU Standard E.161 layout. This terminology has been utilized to delineate the fact that such a telephone keypad may not allow for efficient text entry on the handheld device 300.

The handheld wireless communication device 300 may also be configured to send and receive voice communications such as mobile telephone calls. To facilitate telephone calls, two call keys 605, 609 ("outer keys") are provided in the upper, navigation row 70 (so-called because it includes the navigation tool 327) at the outer ends of the navigation row 70. One of the two call keys is a call initiation key 605, and the other is a call termination key 609. The navigation row 70 also includes another pair of keys ("flanking keys") that are located immediately adjacent to the navigation tool 327, with one flanking key on either side of the navigation tool 327. It is noted that the outer keys are referred to as such not because they are necessarily the outermost keys in the navigation row 70 - there may be additional keys located even further outwardly of the outer keys if desired - but rather because they are located outwardly with respect to the flanking keys. The flanking keys may, for instance, constitute the menu keys 652, which include a menu call-up key 606 and an escape or back key 608. The menu call-up key 606 is used to bring up a menu on the display screen 322 and the escape key 608 is used to return to the previous screen or previous menu selection. The functions of the call keys and the menu keys may, of course, be provided by buttons that are located elsewhere on the handheld device 300, with different functions assigned to the outer keys and the flanking keys.

Furthermore, the handheld device 300 is equipped with components to enable operation of various programs, as shown in FIG. 2. In an exemplary embodiment, the flash memory 324 is enabled to provide a storage location for the operating system 357, device programs 358, and data. The operating system 357 is generally configured to manage other application programs 358 that are also stored in memory 324 and executable on the processor 338. The operating system 357 honors requests for services made by application programs 358 through predefined application program 358 interfaces. More specifically, the operating system 357 typically determines the order in which multiple applications 358 are executed on the processor 338 and the execution time allotted for each application 358, manages the sharing of memory 324 among multiple applications 358, handles input and output to and from other device subsystems 342, and so on. In addition, users can typically interact directly with the operating system 357 through a user interface usually including the keyboard 332 and display screen 322. While in an exemplary embodiment the operating system 357 is stored in flash memory 324, the operating system 357 in other embodiments is stored in read-only memory (ROM) or similar storage element (not shown). As those skilled in the art will appreciate, the operating system 357, device application 358 or parts thereof may be loaded in RAM 326 or other volatile memory.

In one exemplary embodiment, the flash memory 324 contains programs/applications 358 for execution on the handheld device 300 including an address book 352, a personal information manager (PIM) 354, and the device state 350. Furthermore, programs 358 and other information 356 including data can be segregated upon storage in the flash memory 324 of the handheld device 300.

When the handheld device 300 is enabled for two-way communication within the wireless communication network 319, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, and the Code Division Multiple Access (CDMA) network and those networks, generally described as packet-switched, narrowband, data-only technologies which are mainly used for short burst wireless data transfer. For the systems listed above, the handheld wireless communication device 300 must be properly enabled to transmit and receive signals from the communication network 319. Other systems may not require such identifying information. GPRS, UMTS, and EDGE use a Subscriber Identity Module (SIM) in order to allow communication with the communication network 319. Likewise, most CDMA systems use a Removable Identity Module (RUIM) in order to communicate with the CDMA network. The RUIM and SIM card can be used in multiple different communication devices 300. The handheld communication device 300 may be able to operate some features without a SIM/RUIM card, but it will not be able to communicate with the network 319. A SIM/RUIM interface 344 located within the device 300 allows for removal or insertion of a SIM/RUIM card (not shown). The SIM/RUIM card features memory and holds key configurations 351, and other information 353 such as identification and subscriber related information. With a properly enabled communication device 300, two-way communication between the handheld wireless communication device 300 and communication network 319 is possible.

If the handheld wireless communication device 300 is enabled as described above or the communication network 319 does not require such enablement, the two-way communication enabled handheld device 300 is able to both transmit and receive information from the communication network 319. The transfer of communication can be from the handheld device 300 or to the device 300. In order to communicate with the communication network 319, the handheld device 300 in the presently described exemplary embodiment is equipped with an integral or internal antenna 318 for transmitting signals to the communication network 319. Likewise the handheld wireless communication device 300 in the presently described exemplary embodiment is equipped with another antenna 316 for receiving communication from the communication network 319. These antennae (316, 318) in another exemplary embodiment are combined into a single antenna (not shown). As one skilled in the art would appreciate, the antenna or antennae (316, 318) in another embodiment are externally mounted on the handheld device 300.

When equipped for two-way communication, the handheld wireless communication device 300 features a communication subsystem 311. As is understood in the art, this communication subsystem 311 is modified so that it can support the operational needs of the handheld device 300. The subsystem 311 includes a transmitter 314 and receiver 312 including the associated antenna or antennae (316, 318) as described above, local oscillators (LOs) 313, and a processing module 320 which in the presently described exemplary embodiment is a digital signal processor (DSP) 320.

It is contemplated that communication by the handheld device 300 with the wireless network 319 can be any type of communication that both the wireless network 319 and handheld device 300 are enabled to transmit, receive and process. In general, these can be classified as voice and data. Voice communication is communication in which signals for audible sounds are transmitted by the handheld device 300 through the communication network 319. Data is all other types of communication that the handheld device 300 is capable of performing within the constraints of the wireless network 319.

Example device applications that can depend on such data include email, contacts and calendars. For each such application synchronization with home-based versions on the applications can be critical for either or both of their long term and short term utility. As an example, emails are often time sensitive, so substantially real time synchronization is highly desirable. Contacts, on the other hand, can be usually updated less frequently without inconvenience. Therefore, the utility of the handheld device 300 is enhanced when connectable within a communication system, and when connectable on a wireless basis in a network 319 in which voice, text messaging, and other data transfer are accommodated.

While some users may grasp the handheld device 300 in both hands, it is intended that a predominance of users will cradle the handheld device 300 in one hand in such a manner that input and control over the handheld device 300 can be effected using the thumb of the same hand in which the handheld device 300 is held. However, it is appreciated that additional control can be effected by using both hands. As a handheld device 300 that is easy to grasp and desirably pocketable, the size of the handheld device 300 is kept commensurately small. Keeping the handheld device 300 within relatively small dimensional limits provides a hand cradleable unit that may be desirable for its usability and portability. Limitations with respect to the height (length) of the handheld device 300 can be less stringent when considering hand-cradleability. Therefore, in order to gain greater size, the handheld device 300 can be advantageously elongated so that its height is greater than its width, but still remains supported and operated in one hand.

A potential drawback is presented by the small size of the handheld device 300 in that there is limited exterior surface area for the inclusion of user input and device output features. This is especially true for the "prime real estate" on the front face 370 of the handheld device 300, where it is most advantageous to include a display screen 322 that outputs information to the user. The display screen 322 may typically be located above a keyboard 332 that is utilized for data entry into the handheld device 300 by the user. If the screen 322 is provided below the keyboard 332, a problem occurs in that viewing the screen 322 is inhibited when the user is inputting data using the keyboard 332. Therefore, the display screen 322 may be above the input area, thereby solving the problem by assuring that the hands and fingers do not block the view of the screen 322 during data entry periods.

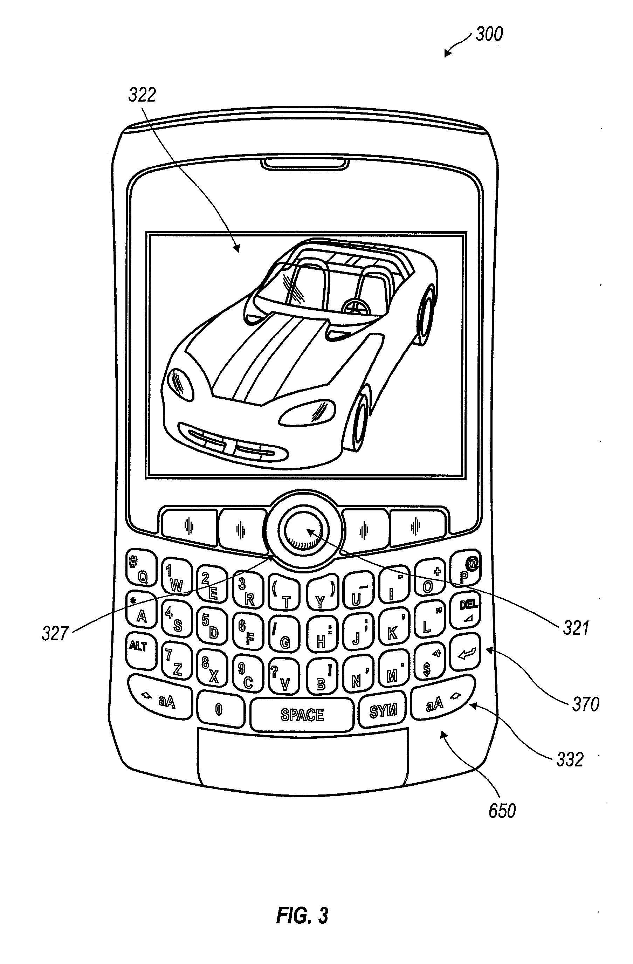

To facilitate textual data entry into the handheld device 300, an alphabetic keyboard 332 is provided. In the exemplary illustrated embodiment of FIG. 3, a full alphabetic keyboard 332 is utilized in which there is one key per letter (with some of the letter keys also having numbers, symbols, or functions associated with them). In this regard, the associated letters can be advantageously organized in various different layouts, such as QWERTY, QWERTZ, AZERTY, or Dvorak layouts, among others, thereby capitalizing on certain users' familiarity with these various letter orders. In order to stay within the bounds of the limited front surface area, however, each of the keys is commensurately small when, for example, twenty-six keys must be provided in the instance of the English language. While the illustrated embodiments display a keyboard 332, some embodiments of the device can be provided without a physical keyboard.

The keyboard 332 includes a plurality of keys that can be of a physical nature such as actuable buttons, or they can be of a software nature, typically constituted by virtual representations of physical keys on a display screen 322 (referred to herein as "virtual keys"). It is also contemplated that the user input can be provided as a combination of the two types of keys. Each key of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space. Input commands and functions can include such things as delete, backspace, moving a cursor up, down, left or right, initiating an arithmetic function or command, initiating a command or function specific to an application program or feature in use, initiating a command or function programmed by the user and other such commands and functions that are well known to those persons skilled in the art. Specific keys or other types of input devices can be used to navigate through the various applications and features thereof. Further, depending on the application 358 or feature in use, specific keys can be enabled or disabled.

In the case of physical keys, all or a portion of the plurality of keys have one or more indicia representing character(s), command(s), and/or functions(s) displayed at their top surface and/or on the surface of the area adjacent the respective key. In the instance where the indicia of a key's function is provided adjacent the key, the indicia can be printed on the device cover beside the key, or in the instance of keys located adjacent the display screen 322. Additionally, current indicia for the key may be temporarily shown nearby the key on the display screen 322.

In the case of virtual keys, the indicia for the respective keys are shown on the display screen 322, which in one embodiment is enabled by touching the display screen 322, for example, with a stylus, finger, or other pointer, to generate the character or activate the indicated command or function. Some examples of display screens 322 capable of detecting a touch include resistive, capacitive, projected capacitive, infrared and surface acoustic wave (SAW) touchscreens.

Physical and virtual keys can be combined in many different ways as appreciated by those skilled in the art. In one embodiment, physical and virtual keys are combined such that the plurality of enabled keys for a particular application or feature of the handheld wireless communication device 300 is shown on the display screen 322 in the same configuration as the physical keys. Using this configuration, the user can select the appropriate physical key corresponding to what is shown on the display screen 322. Thus, the desired character, command or function is obtained by depressing the physical key corresponding to the character, command or function displayed at a corresponding position on the display screen 322, rather than touching the display screen 322.

In at least one embodiment, a handheld wireless communication device 300 that is configured to send and receive email text messages comprises a hand cradleable body 371 configured to be held in a text entry orientation by an operator or user. (For example see FIGS. 1 and 3). The body 371 of the handheld wireless communication device 300 has a front face 370 at which a display screen 322 is located and upon which information is displayed to the operator of the handheld device 300 in the text entry orientation. The handheld device 300 further comprises a microprocessor configured to run software programs on the handheld device 300 and to receive operator commands from user inputs, such as a keyboard 332 and trackball 321, located on the handheld device 300.

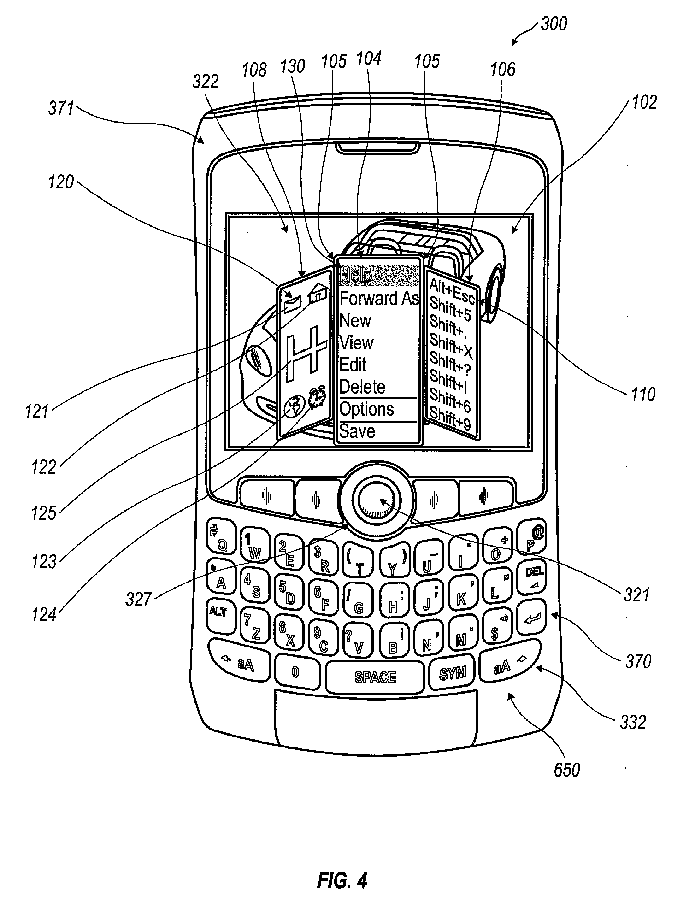

As shown for example in FIG. 4, the present disclosure provides at least one side-bar of legends 106,108 to a displayed menu 104 on the display screen 322 of the handheld electronic device 300. A method and a handheld electronic device 300 having a microprocessor 338 (shown in Fig. 2) capable of presenting the menu 104 and side-bars 106,108 is disclosed herein. The handheld electronic device 300 as disclosed herein includes but is not limited to a hand cradleable body 371 housing a microprocessor 338. The microprocessor 338 as well as microprocessor-run software application can be situated within the hand cradleable body 371. The microprocessor-run software application program displays a menu 104 including available user actions on a display screen 322 of the handheld electronic device 300.

As illustrated in FIG. 4, the menu 104 is shown centered on the display screen 322. In other embodiments, the positioning of the menu 104 can be located on the right or left sides of the display screen 322. (Not shown.) The available user action on the displayed menu 104 can correspond to a currently-running application program.

The present disclosure includes a method for providing at least one side-bar of legends 106,108 to a displayed menu 104 on a display screen 322 of a handheld electronic device 300. The handheld electronic device 300 includes a keyboard 332 as a user input and a microprocessor 338 configured to receive instruction from user inputs on the device 300. The term user input is be used to describe devices or portions of a device that can be manipulated by a user to input text, commands, cursor control, or other information to the handheld electronic device 300. Some examples of user inputs include keys, buttons, navigation tools, and the like. The keyboard 332 can be arranged according to any one of the above described embodiments, and other user inputs can be one of those as described above. The microprocessor 338 is also configured to affect corresponding adaptations to the displayed images on the display screen 322, wherein a portion of the legends 110,120 of the side-bars of legends 106,108 convey either additional information or a currently available next action relative to a currently running application of the device 300. In at least one embodiment, both additional information and currently available next action relative to a currently running application of the device can be displayed simultaneously. The method includes initiating display of a plurality of legends 110,120 on the display screen 322 of the handheld electronic device 300 at a lateral side 105 of a displayed menu 104, wherein the displayed legends 110,120 present available user actions relative the displayed menu 104 which corresponds to a currently-running application on the device 300. In one embodiment the displayed menu 104 is based on receipt of a cursor position data indicating that the cursor on the display screen 322 is in a proximate area of the display screen 322 on which the plurality of legends 110,120 are displayed. The cursor position data can be based upon manipulation data received from a trackball 321 on the handheld device 300. In one example, when the cursor on the display screen 322 is navigated to the right it enters the proximate area of the display screen 322 to the right of the menu 104 and a side bar of legends 106 is displayed. Likewise, when the cursor on the display screen 322 is navigated to the left it enters the proximate area of the display screen 322 to the left of the menu 104 and a side bar of legends 108 is displayed.

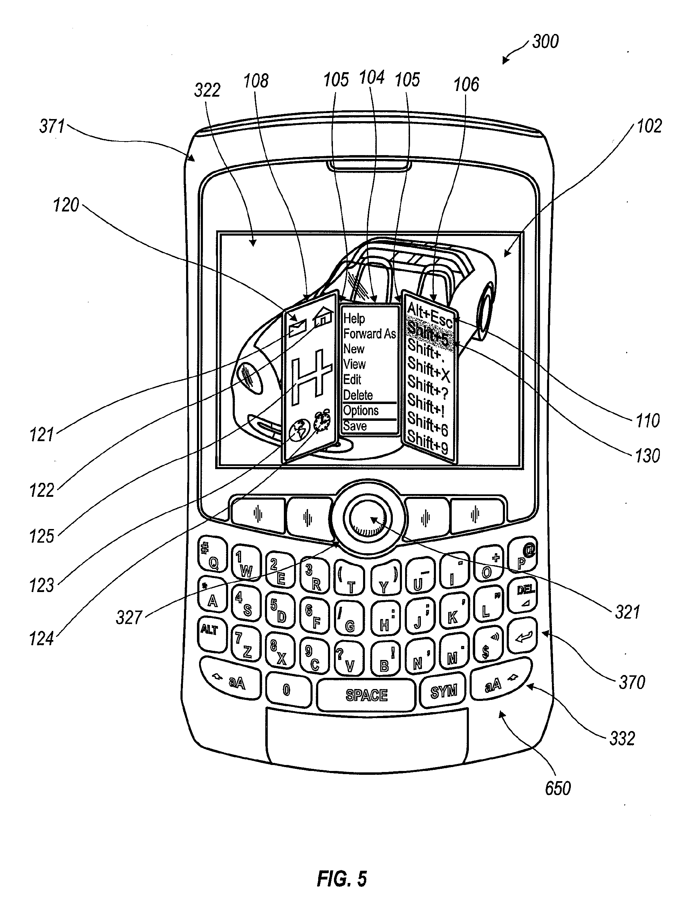

As shown, for example, in FIGS. 4 and 5, the menu 104 as recited above is comprised of a plurality of vertically stacked available user actions 130. These available user actions 130 can be based upon a variety of different factors including which application is currently running on the handheld device 300, a displayed page 102 in the currently running application, and previously performed functions. For example, if an email application is currently running on the microprocessor 338 of the handheld electronic device 300, a different menu might be displayed than if a calendar application were running on the microprocessor 338 of the handheld electronic device 300. The email application menu of available user actions might include a forward, reply, and reply all action, whereas the calendar application menu might not list these action items. Items that might be shown on the menu for a calendar application include items such as next day, previous day, view month, go to date, and the like. As detailed in the example provided above, the menu items and other items can change depending upon the currently running application.

As shown in FIGS. 4 and 5 the plurality of legends can be vertically stacked at a lateral side 105 of the menu 104 thereby establishing at least one side-bar of legends 106,108 to the menu 104. In this arrangement the portions of the display screen 322 to the left and right of menu 104 may be utilized for displaying the legends 110,120. The legends may also be displayed above and below the menu 104. (Not shown.) While two side-bars of legends 106,108 are generally illustrated, it is contemplated that only one side-bar of legends may be shown in one embodiment. Additionally, more than two side-bars of legends, for example three or four, can be provided. When the legends 110,120 are displayed at the right or left lateral sides 105 of the menu 104, a correspondence can be inferred by the operator linking the legends 110,120 to what is shown on the menu 104. In at least one embodiment, at least a portion of the plurality of legends 110 define short-cut key commands that can be currently performed on an associated keyboard 332 of the handheld electronic device 300. For example in order to perform a "forward as" operation, the operator can select the label indicated by "Forward As" or enter the key combination of "Shift" and "5." Once the operator utilizes one of the above inputs, the email program performs a "forward as" function that allows the operator to select the type of message, such as email, SMS (short-message-service), or MMS (multimedia-messaging-service), IM (instant message), peer-to-peer message, etc., that should be forwarded. Short-cuts are often used by experienced operators of handheld devices, but these short-cuts can be obscure or difficult to learn and remember. Thus, it is desirable to provide operators with a way to learn short-cuts and commands without use of a user manual.

In another embodiment at least a portion of the plurality of legends 110 defines short-cut gestures that can be currently performed on the handheld electronic device 300. The gestures can cause the device to execute various functions such as forwarding messages, cut operations, zoom operations, and other functions as desired. In at least one embodiment, a gesture can be made on a touchscreen of the handheld electronic device 300. In another embodiment, the gesture can be made on a touch-sensitive keypad. The plurality of legends 110 can illustrate these gestures through animation, symbols, or the like.

In the example provided in the FIG. 4, the menu 104 comprises the following items "Help," "Forward As," "New," "View," "Edit," "Delete," "Options," and "Save." The legends 110 displayed in the right side-bar of legends 106 include "Alt + ESC," "Shift+5," "Shift + . ," "Shift + X," "Shift + ?," "Shift +!," "Shift + 6," and "Shift + 9," wherein these legends 110 correspond to the items in the menu 104 respectively. These legends 110 are provided as exemplary listings and other legends can be implemented.

The legends 110 can be such that they have a direct correspondence with an item shown in the menu 104 as shown above. Alternatively, as described below, one or more of the legends may not have a direct correspondence or any correspondence with the menu 104. In at least one embodiment, one or more legends 110 in the side-bar of legends 106 does not correspond to an item in menu 104. For example, a general search function could be provided in the side-bar of legends 106 by listing an additional legend such as "Alt + Sym." This legend could launch a specialized search function that would enable an operator of the device to launch a search program. Other functions could likewise be provided without correspondence to the menu 104.

As indicated above, the legends 110 can inform the operator of the appropriate short-cut command or gesture that can be entered using the keyboard 332 rather than selecting the item from the menu 104. Thus, in the future if the operator can remember the short-cut displayed in legend 110, the operator can enter the short-cut without displaying the menu 104. These short-cuts allow operators to save time by entering common commands using the keyboard 332 rather than displaying the menu 104 and making the selection from the list of menu items. In some embodiments, the menu is presented in response to user actuation of a designated key which can be the menu key 608 as described above. The menu 104 may be a full menu or an abbreviated menu. In some cases, the menu 104 is launched in response to actuation of the navigation tool 327. In one example, the menu can be displayed in response to depression of the trackball 321.

While in general the short-cut commands are the same without dependence on the keyboard 332 used for the handheld electronic device 300, some short-cuts may be specific to the keyboard 332 on the handheld electronic device 300. For instance, the reduced keyboard 332 of FIG. 1 has fewer keys as compared with the full keyboard 332 of FIG. 3; therefore, fewer short-cut commands can be generated using the keyboard 332. Likewise, the short-cut commands might be specific to the type of keyboard 332 on the handheld device 300. Furthermore, short-cut gestures can be user programmed.

As described above and shown for example in FIG. 4, cursor navigation can be directed using a navigation tool 327 located on the handheld electronic device 300. In one example, the navigation tool 327 is located on the front face 370 of the handheld electronic device 300. The navigation tool 327 can be a variety of different devices as described above, and in one particular example as illustrated the navigation tool 327 comprises a trackball 321. In the illustrated examples, the cursor navigation about the display screen 322 is affected by manipulation of a trackball 321 located on the handheld device 300 as an instructing user input to the microprocessor 338. While the figures illustrate only the trackball 321, one skilled in the art would appreciate other placement and positioning of other navigation tools 327. In at least one embodiment, the device is provided with a touchscreen, but no additional navigation tool 327.

As shown in FIG. 5, in one embodiment when the operator navigates the cursor into an area of the display screen 322 occupied by the vertically stacked legends 110, at least a portion of the displayed menu 104 shrinks in size and at least a portion of the vertically stacked legends 110 enlarges in size. This enables the operator to more clearly read the vertically stacked legends 110. In one example a side-bar 106, such as the one illustrated on the right lateral side of the menu 104, can include a plurality of indicia informative of short-cut key commands presently executable on the associated keyboard 332 of the handheld electronic device 300. When the navigating cursor passes into an area of the display screen 300 occupied by one of the legends 110 having indicia informative of a short-cut key command, a description of the respective short-cut key command is provided.

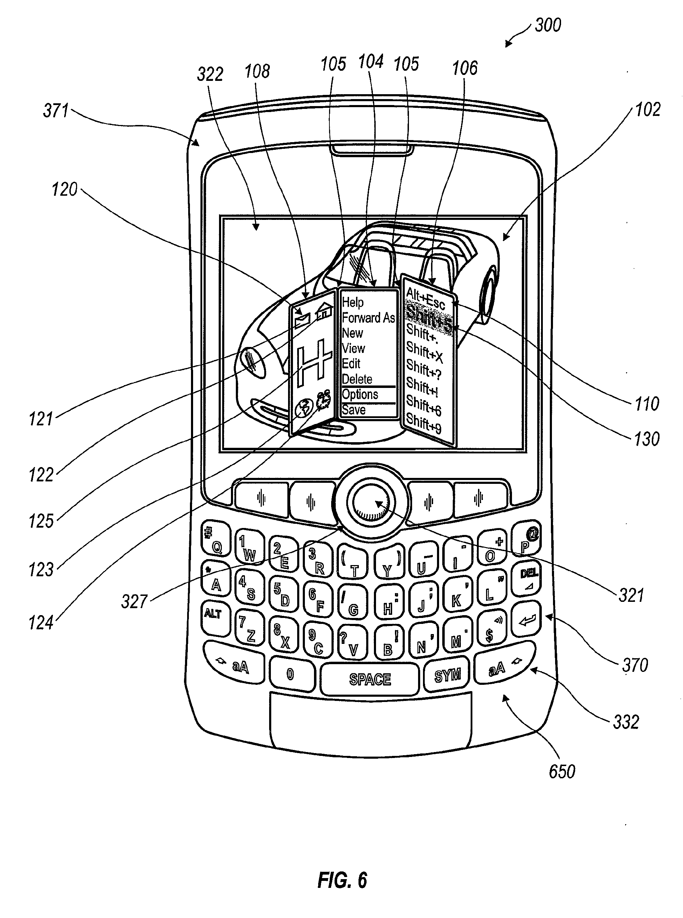

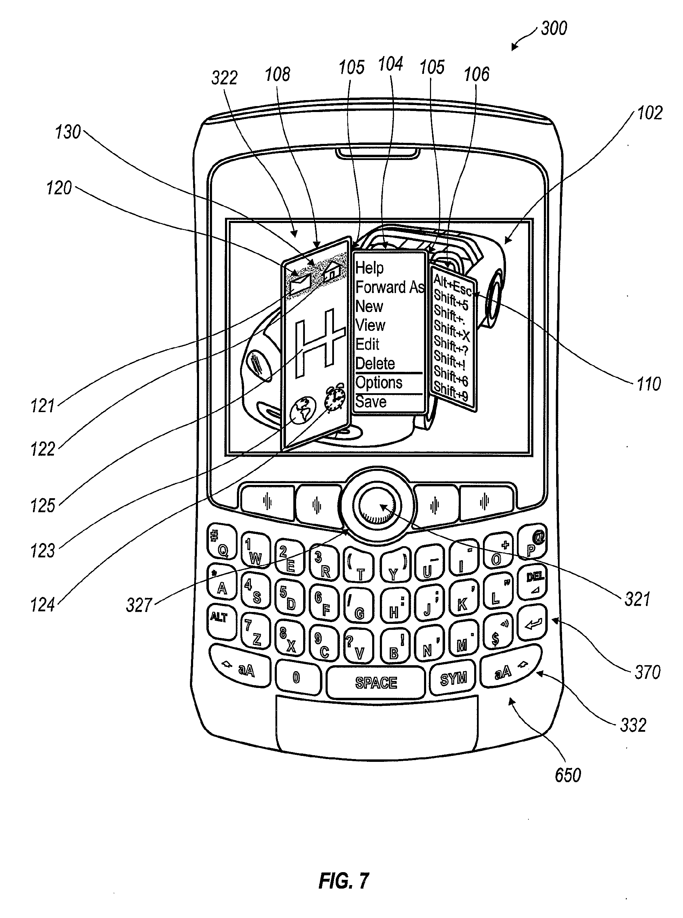

An illustrative example of the above described expansion of the vertically stacked legends 110 can be seen in at least FIGS. 5 and 6. As shown for instance in FIG. 6, when the cursor position data indicates that the cursor is moved over the side-bar of legends 106 that correspond to short-cut commands, that side-bar 106 can be enlarged. In another embodiment, the displayed menu 104 shrinks in size and at least a portion of the vertically stacked legends 110 enlarges in size when the cursor position data indicates that the cursor is in an area of the display screen 322 occupied by the vertically stacked legends 110. Furthermore, the center menu 104 is reduced in size as compared to its original size or as compared to the size of the side-bar 106. The legends 110 can be adjusted such that the overall size of the legend 110 changes or just one dimension of the legend changes. For example, if the legend 110 comprises text in a given font size, the font size of the legend 110 can change or alternatively the size of the text can be stretched in one or more dimensions. As can be understood from comparing FIGS. 5 and 6, the menu 104 can shrink in size as in FIG. 5 or the menu 104 can shrink and the side-bar of legends 106 enlarges in size as illustrated in FIG. 6. In yet another embodiment as illustrated in FIG. 7, the side-bar of legends 108 enlarges in size, but the menu 104 and the other side-bar of legends 106 remain the previous sizes.

In another embodiment, when the cursor position data indicates that the cursor is in an area of the display screen 322 occupied by one of the legends 110 having indicia informative of a short-cut key command, a description of the respective short-cut key command maybe displayed on the display screen 322. For example, when the operator navigates the cursor into the area occupied by one of the legends 110, the steps involved in actuating the key command can be displayed. In one embodiment, information regarding the programs in which the short-cut key command can be used is also displayed. Furthermore, the description can provide information regarding whether the short-cut key command requires that a certain item be selected by the operator, a previous action to have been performed, or other context based implementation of the short-cut key command.

While the above has been described in relation to legends 110 relating to short-cuts, the display of different sizes of the short-cut key commands and description of the short-cut key command can be implemented with respect to other types of legends.

FIG. 4, for example, illustrates the situation in which the method involves displaying a side-bar of legends 108 comprising a plurality of indicia informative of inter-application actions presently executable on the keyboard 332 of the handheld electronic device 300. These inter-application actions can include switching between currently running applications, returning to a home screen, closing the currently running application, launching a particular application, opening a device property manager, or the like. These are illustrative examples of some of the different inter-application actions that are available to users and are not intended to limit the type of inter-application actions that are within the scope of this disclosure. As illustrated in FIG. 4, the indicia informative of the inter-application actions can be icons. For example, when an operator selects the home screen icon 122 the microprocessor 338 presents the home screen on the display screen 322. In one embodiment when the home screen is presented on the display screen 322, the previously running application to remains open. In another embodiment, launching the home screen closes the currently running application and displays the home screen.

Additional icons shown in the side-bar of legends 108 include an email icon 121, a path viewer 125, an internet browser icon 123, and an alarm icon 124. These additional icons are provided for illustrative purposes and other icons can be shown in this side-bar of legends 108. The icons in the side-bar of legends 108 can be the icons associated with the most frequently used applications, those icons associated with currently running application, or icons associated with predetermined applications, which may be user selected. Alternatively, the icons can be those icons associated with some combination of the above mentioned categories. When one of the above mentioned icons is selected, the application associated with that icon is launched and presented on the display screen of the handheld electronic device 300.

In at least one embodiment, the path viewer 125 is provided in order to assist the operator with navigation to one of the displayed icons 121-124. The path viewer 125 provides feedback to the operator while navigating the icons 121-124 as to the direction that the operator needs to rotate the trackball 321. For instance, if the operator wishes to select the internet browser icon 123, the operator rotates the trackball 321 to the left and enters the path on the right hand side of the path viewer 125 (the horizontal bar). If the operator continues to rotate the trackball 321 to the left an indicator (not shown) within the path viewer 125 informs the operator of the direction of travel. When selecting the internet browser icon 123, the operator rotates the trackball 321 until the indicator reaches the end of the horizontal path and then rotates the trackball 321 downward until the internet browser icon 123 is selected. The indicator informs the operator where on the path viewer 125, the operator has currently manipulated the indicator. The above described indicator may be a graphical object such as a ball or a color that fills the path. The paths downward and upward indicate the time at which the operator should rotate the trackball 321 to make the selection of one of the icons 121-124. Furthermore, as the operator continues to rotate the trackball 321 downward the operator can see which icon is about to be selected. As illustrated four paths are provided on the path viewer 125, but in other embodiments the number of paths can be equal to the number of icons shown in the side-bar of legends 108. While this process has been described as stepwise, the speed at which this occurs can be rapid. For instance the operator could make the selection in less than one second. While this path viewer 125 is provided in the illustrated embodiment, it is contemplated that it may be omitted in some embodiments. Furthermore, the path viewer 125 may be operator selectable such that the path viewer 125 only appears upon request of the operator. For example, by default the path viewer 125 may be provided, but can be removed from the side-bar of legends 108 through operator selection.

The operator can navigate the cursor into an area of the display screen 322 occupied by one of the legends 120 having indicia informative of an inter-application action and actuating a user input on the device thereby executing the indicated inter-application action. Alternatively, the operator can navigate the cursor into an area of the display screen 322 occupied by one of the legends 120 having indicia informative of an inter-application action and an actuation message is received. In a similar manner to that as described above the side-bar of legends 108 can be enlarged for clarity or other reasons as illustrated in FIG. 7.

In another embodiment, a method for providing a side-bar of legends 106,108 to a display menu 104 on a display screen 322 of a handheld electronic device 300 is disclosed. The method displays a plurality of legends at a lateral side 105 of a displayed menu 104 based upon receipt of a cursor position data indicating that a cursor is in a proximate area of the display screen 322 to the display of the plurality of legends. The cursor position data is based upon manipulation data received from a trackball 321 on the handheld electronic device 300. As described above the displayed menu 104 is comprised of a plurality of vertically stacked available user actions. The plurality of legends is vertically stacked at a lateral side 105 of the displayed menu 104 and thereby establishing the side-bar of legends 106 to the menu 104. As described above, at least a portion of the plurality of legends 110 define short-cut key commands presently executable on the handheld electronic device 300. In one embodiment, at least a portion of the plurality of legends 110 signifies inter-application actions presently executable on the handheld electronic device 300. In at least one embodiment, both legends 110 defining short-cut key commands and legends 120 signifying inter-application action can be provided.

As shown in FIGS. 5-7, the method further includes receiving cursor position data that indicates that the cursor is in an area of the display screen 322 occupied by the vertically stacked legends and causing at least a portion of the displayed menu 104 to shrink in size and at least a portion of the vertically stacked legends to enlarge in size. When the established side-bar of legends comprises a plurality of indicia informative of short-cut key commands 110, the method can further include receiving cursor position data indicating that the cursor is in an area of the display screen occupied by one of the legends comprising of indicia informative of a short-cut key command and causing further inclusion of a description of the respective short-cut key command. Similarly, when the side-bar of legends comprises a plurality of indicia informative of inter-application actions, further receiving cursor position data that indicates that the cursor is in an area of the display screen occupied by one of the indicia informative of the inter-application action and actuating a user input on the device thereby executing the indicated inter-application action.

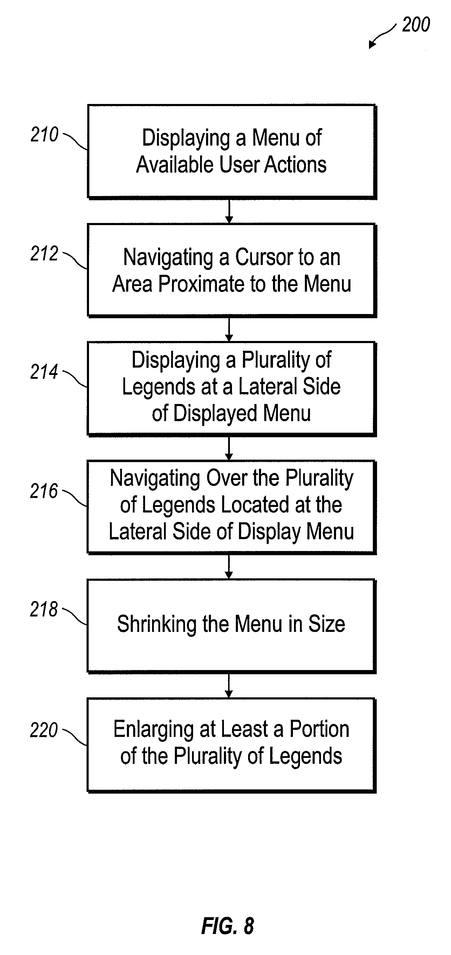

In yet another embodiment, a method 200 of presenting a plurality of legends is also shown in FIG. 8. First, a display of a menu of available user actions is presented to the operator of the handheld electronic device (block 210). This menu of available user actions allows the operator to select an item shown on the menu for further selection and use. When the cursor is navigated to an area proximate to the menu (block 212) a plurality of legends at a lateral side of the displayed menu is provided (block 214). As described above the navigation of the cursor can be driven through operation of the navigation tool 327 such as trackball 321. If the cursor continues to be navigated over the plurality of legends located at the lateral side of the displayed menu (block 216), then the menu can optionally shrink in size (block 218). Furthermore, in the illustrated embodiment, at least a portion of the plurality of legends can be optionally enlarged (block 220).

As shown for example in FIG. 4, the present disclosure also includes a handheld electronic device 300 including a display screen 102 and user inputs located on the device. The device includes a hand cradleable body 371 housing a microprocessor-run software application program that displays a menu 104 including available user actions on a display screen 322 of the handheld electronic device 300. The available user actions of the displayed menu 104 correspond to a currently-running application program. The microprocessor-run software application program further displays a plurality of legends 106,108 at a lateral side 105 of the displayed menu 104 based on a cursor position data that indicates a cursor is in a proximate area of the display screen 322 on which the plurality of legends 110, 120 are displayed. Furthermore in another embodiment, the menu 104 is comprised of a plurality of vertically stacked available user actions 130.

In yet another embodiment, the handheld electronic device 300 may include the plurality of legends 110 being vertically stacked at a lateral side 105 of the menu 104 thereby establishing at least one side-bar of 106 legends 110 to the menu 104. At least a portion of the plurality of legends 110 may define short-cut key commands presently executable on an associated keyboard 332 of the handheld electronic device 300.

In another embodiment of the handheld electronic device 300 described above, at least a portion of the plurality of legends 120 signify presently executable inter-application actions on the handheld electronic device 300. As shown in FIGS. 5-7 the microprocessor-run software application program may be programmed to cause at least a portion of the displayed menu 104 to shrink in size and at least a portion of the vertically stacked legends 110 to enlarge in size when the cursor is navigated into an area of the display screen occupied by the vertically stacked legends. Furthermore, the side-bar of legends 106 may include a plurality of indicia informative of short-cut key commands presently executable on an associated keyboard 332 of the handheld electronic device 300.

The microprocessor-run software application program may be programmed to cause further inclusion of description of the respective short-cut key command when the cursor is navigated into an area of the display screen 322 occupied by one of the legends 110 comprising indicia informative of a short-cut key command. The established side-bar of legends 108 may include a plurality of indicia informative of inter-application actions presently executable on an associated keyboard 332 of the handheld electronic device 300. The microprocessor-run software application program may also be programmed to execute the indicated inter-application action when the cursor is navigated into an area of the display screen 322 occupied by one of the legends 120 comprising indicia informative of an inter-application action and a user input on the handheld electronic device 300 is actuated.

Exemplary embodiments have been described hereinabove regarding both handheld electronic devices 300, as well as the communication networks 319 within which they can operate. Again, it should be appreciated that the focus of the present disclosure is providing at least one side-bar of legends 106,108 to a displayed menu 104 on a display screen 322.

## Claims

1. A handheld electronic device (300) including a display screen (322) located on the device (300), the device (300) comprising:
a body (371) housing a microprocessor-run software application program that displays a menu (104) including available user actions on the display screen (332) of the handheld electronic device (300);
wherein said microprocessor-run software application program further displays a plurality of legends (110,120) at a lateral side (105) of the displayed menu (104) based on receipt of a cursor position data indicating that a cursor on the display screen (322) is in a proximate area of the display screen (322) on which the plurality of legends (110,120) is displayed.

2. The handheld electronic device (300) as recited in claim 1, wherein the cursor position data is based upon manipulation data received from a trackball (321) on the handheld device (300).

3. The handheld electronic device (300) as recited in any one of claims 1-2, wherein the cursor position data is based upon manipulation data received from a touchscreen on the handheld device (300).

4. The handheld electronic device (300) as recited in any one of claims 1-3, wherein the menu (104) comprises a plurality of vertically stacked available user actions (130).

5. The handheld electronic device (300) as recited in any one of claims 1-4, wherein at least a portion of the plurality of legends (110) define short-cut key commands presently executable on the handheld electronic device.

6. The handheld electronic device (300) as recited in any one of claims 1-5, wherein at least a portion of the plurality of legends (110) signify presently executable inter-application actions on the handheld electronic device (300).

7. The handheld electronic device (300) as recited in any one of claims 1-6, wherein the plurality of legends (110) are vertically stacked at a lateral side (105) of the menu (104) thereby establishing at least one side-bar of legends (106,108) to the menu (104).

8. The handheld electronic device (300) as recited in claim 7, wherein said microprocessor-run software application program is programmed to cause at least a portion of the displayed menu (104) to shrink in size and at least a portion of the vertically stacked legends (110) to enlarge in size when the cursor position data indicates that the cursor is in an area of the display screen (322) occupied by the vertically stacked legends (110).

9. The handheld electronic device (300) as recited in claim 8, wherein the side-bar of legends comprises a plurality of indicia informative of short-cut gestures presently executable on the handheld electronic device (300).

10. The handheld electronic device (300) as recited in any one of claims 8-9, wherein the side-bar of legends (106) comprises a plurality of indicia informative of short-cut key commands presently executable on the handheld electronic device (300).

11. The handheld electronic device (300) as recited in claim 10, wherein said microprocessor-run software application program is programmed to cause further inclusion of description of the respective short-cut key command when the cursor position data indicates that the cursor is in an area of the display screen (322) occupied by one of the legends (110) comprising indicia informative of a short-cut key command.

12. The handheld electronic device (300) as recited in claim 8, wherein the established side-bar of legends (108) comprises a plurality of indicia informative of inter-application actions presently executable on the handheld electronic device (300).

13. The handheld electronic device (300) as recited in claim 12, wherein said microprocessor-run software application program is programmed to execute the indicated inter-application action when the cursor position data indicates that the cursor is in an area of the display screen (322) occupied by one of the legends (120) comprising indicia informative of an inter-application action and an actuation message is received.

14. A method for providing a side-bar of legends (106,108) to a displayed menu on a display screen (322) of a handheld electronic device (300), said method comprising:
initiating display of a plurality of legends on the display screen (322) of the handheld electronic device (300) at a lateral side (105) of a displayed menu (104), wherein the displayed legends (110,120) present available user actions relative the displayed menu (104) and the display of legends (110,120) is initiated upon receipt of a cursor position data indicating that a cursor is in a proximate area of the display screen (322) to the display of the plurality of legends (110,120).

15. The method as recited in claim 14, wherein the cursor position data is based upon manipulation data received from at least one of a trackball (321) or a touchscreen on the handheld electronic device (300).

16. The method as recited in any one of claims 14-15, wherein the displayed menu (104) comprises a plurality of vertically stacked available user actions (130).

17. The method as recited in claim 16, wherein the plurality of legends (110) are vertically stacked at a lateral side (105) of the displayed menu (104) and thereby establish the side-bar of legends (106,108) to the menu (104).

18. The method as recited in claim 17, further comprising:
receiving cursor position data that indicates that the cursor is in an area of the display screen (322) occupied by the vertically stacked legends (110, 120); and
causing at least a portion of the displayed menu (104) to shrink in size and at least a portion of the vertically stacked legends (110,120) to enlarge in size.

19. The method as recited in claim 18, wherein the established side-bar of legends (106) comprises a plurality of indicia informative of at least one of a short-cut key command or short-cut gesture presently executable on the handheld electronic device (300).

20. The method as recited in claim 19, further comprising:
receiving cursor position data indicting that the cursor is in an area of the display screen (322) occupied by one of the legends comprising indicia informative of a short-cut key command; and
causing inclusion of description of the respective short-cut key command.

21. The method as recited in any one of claims 18-20, wherein the established side-bar of legends (108) comprises a plurality of indicia informative of inter-application actions presently executable on the handheld electronic device (300).

22. The method as recited in claim 21, further comprising:
receiving cursor position data that indicates that the cursor is in an area of the display screen (322) occupied by one of the legends (120) comprising indicia informative of an inter-application action;
receiving an actuation message; and
executing the indicated inter-application action.

23. A microprocessor-run software program for a handheld electronic device (300) that includes a display screen (322) located on the device (300), wherein said microprocessor-run software program is programmed to:
display a menu including available user actions on the display screen (322) of the handheld electronic device (300); and
display a plurality of legends (110,120) at a lateral side (105) of the displayed menu (104) based on a cursor position data that indicates a cursor is in a proximate area of the display screen (322) on which the plurality of legends display.

24. The microprocessor-run software program as recited in claim 23, wherein the cursor position data is based upon manipulation of at least one of a trackball (321) or a touchscreen on the handheld electronic device (300).

25. The microprocessor-run software program as recited in any one of claims 23-24, wherein the program-displayed menu (104) comprises a plurality of vertically stacked available user actions (130).

## Amended claims

### Amended claims in accordance with Rule 137(2) EPC.

**1.** A handheld electronic device (300) including a display screen (322) located on the device (300), the device (300) comprising:
a body (371) housing a microprocessor-run software application program that displays a menu (104) including available user actions on the display screen (332) of the handheld electronic device (300);
wherein said microprocessor-run software application program further displays a plurality of legends (110) at a lateral side (105) of the displayed menu (104) based on receipt of a cursor position data indicating that a cursor on the display screen (322) is in a proximate area of the display screen (322) on which the plurality of legends (110) is displayed, wherein the displayed plurality of legends (110) presents available user actions corresponding to items of the displayed menu (104).

**2.** The handheld electronic device (300) as recited in claim 1, wherein the cursor position data is based upon manipulation data received from a trackball (321) on the handheld device (300).

**3.** The handheld electronic device (300) as recited in any one of claims 1-2, wherein the cursor position data is based upon manipulation data received from a touchscreen on the handheld device (300).

**4.** The handheld electronic device (300) as recited in any one of claims 1-3, wherein the menu (104) comprises a plurality of vertically-stacked available user actions (130).

**5.** The handheld electronic device (300) as recited in any one of claims 1-4, wherein at least a portion of the plurality of legends (110) define short-cut key commands presently executable on the handheld electronic device.

**6.** The handheld electronic device (300) as recited in any one of claims 1-5, wherein at least a portion of the plurality of legends (110) signify presently executable inter-application actions on the handheld electronic device (300).

**7.** The handheld electronic device (300) as recited in any one of claims 1-6, wherein the plurality of legends (110) are vertically stacked at a lateral side (105) of the menu (104) thereby establishing at least one side-bar (106) of legends (110) to the menu (104).

**8.** The handheld electronic device (300) as recited in claim 7, wherein said microprocessor-run software application program is programmed to cause at least a portion of the displayed menu (104) to shrink in size and at least a portion of the vertically-stacked legends (110) to enlarge in size when the cursor position data indicates that the cursor is in an area of the display screen (322) occupied by the vertically-stacked legends (110).

**9.** The handheld electronic device (300) as recited in claim 8, wherein the side-bar (106) of legends (110) comprises a plurality of indicia informative of short-cut gestures presently executable on the handheld electronic device (300).

**10.** The handheld electronic device (300) as recited in any one of claims 8-9, wherein the side-bar (106) of legends (110) comprises a plurality of indicia informative of short-cut key commands presently executable on the handheld electronic device (300).

**11.** The handheld electronic device (300) as recited in claim 10, wherein said microprocessor-run software application program is programmed to cause further inclusion of description of the respective short-cut key command when the cursor position data indicates that the cursor is in an area of the display screen (322) occupied by one of the legends (110) comprising indicia informative of a short-cut key command.

**12.** The handheld electronic device (300) as recited in claim 8, wherein another established side-bar (108) of legends (120) comprises a plurality of indicia informative of inter-application actions presently executable on the handheld electronic device (300).

**13.** The handheld electronic device (300) as recited in claim 12, wherein said microprocessor-run software application program is programmed to execute the indicated inter-application action when the cursor position data indicates that the cursor is in an area of the display screen (322) occupied by one of the legends (120) comprising indicia informative of an inter-application action and received actuation of a user input on the handheld electronic device.

**14.** A method for providing a side-bar of legends (106) to a displayed menu on a display screen (322) of a handheld electronic device (300), said method comprising:
initiating display of a plurality of legends on the display screen (322) of the handheld electronic device (300) at a lateral side (105) of a displayed menu (104), wherein the displayed legends (110) present available user actions corresponding to items of the displayed menu (104) and the display of legends (110) is initiated upon receipt of a cursor position data indicating that a cursor is in a proximate area of the display screen (322) to the display of the plurality of legends (110).

**15.** The method as recited in claim 14, wherein the cursor position data is based upon manipulation data received from at least one of a trackball (321) or a touchscreen on the handheld electronic device (300).

**16.** The method as recited in any one of claims 14-15, wherein the displayed menu (104) comprises a plurality of vertically-stacked available user actions (130).

**17.** The method as recited in claim 16, wherein the plurality of legends (110) are vertically stacked at a lateral side (105) of the displayed menu (104) and thereby establish the side-bar (106) of legends (110) to the menu (104).

**18.** The method as recited in claim 17, further comprising:
receiving cursor position data that indicates that the cursor is in an area of the display screen (322) occupied by the vertically-stacked legends (110); and,
causing at least a portion of the displayed menu (104) to shrink in size and at least a portion of the vertically-stacked legends (110) to enlarge in size.

**19.** The method as recited in claim 18, wherein the established side-bar (106) of legends (110) comprises a plurality of indicia informative of at least one of a short-cut key command or short-cut gesture presently executable on the handheld electronic device (300).

**20.** The method as recited in claim 19, further comprising:
receiving cursor position data indicting that the cursor is in an area of the display screen (322) occupied by one of the legends (110) comprising indicia informative of a short-cut key command; and,
causing inclusion of description of the respective short-cut key command.

**21.** The method as recited in any one of claims 18-20, wherein another established side-bar (108) of legends (120) comprises a plurality of indicia informative of inter-application actions presently executable on the handheld electronic device (300).

**22.** The method as recited in claim 21, further comprising:
receiving cursor position data that indicates that the cursor is in an area of the display screen (322) occupied by one of the legends (120) comprising indicia informative of an inter-application action;
receiving a signal that a user input on the device is actuated; and,
executing the indicated inter-application action.

**23.** A microprocessor-run software program for a handheld electronic device (300) that includes a display screen (322) located on the device (300), wherein said microprocessor-run software program is programmed to:
display a menu including available user actions on the display screen (322) of the handheld electronic device (300); and,
display a plurality of legends (110) at a lateral side (105) of the displayed menu (104) based on a cursor position data that indicates a cursor is in a proximate area of the display screen (322) on which the plurality of legends display, wherein the displayed legends (110) present available user actions corresponding to items of the displayed menu (104).

**24.** The microprocessor-run software program as recited in claim 23, wherein the cursor position data is based upon manipulation of at least one of a trackball (321) or a touchscreen on the handheld electronic device (300).

**25.** The microprocessor-run software program as recited in any one of claims 23-24, wherein the program-displayed menu (104) comprises a plurality of vertically-stacked available user actions (130).
